# FASCICULE DE BREVET EUROPEEN

(11) **EP 2 619 455 B1**
(45) Date de publication et mention de la délivrance du brevet: **14.01.2015**
(21) Numéro de dépôt: 11773062.2
(22) Date de dépôt: 12.09.2011
(51) Int. Cl.: F04B 13/02, F04B 15/08, B01D 53/00, F25J 3/00, F25J 3/06

(54) **PROCEDE ET INSTALLATION DE PURIFICATION D'UN FLUX GAZEUX**
VERFAHREN UND VORRICHTUNG ZUR REINIGUNG EINER GASSTRÖMUNG
METHOD AND APPARATUS FOR PURIFYING A FLOW OF GAS

(30) Priorité: 23.09.2010 FR 1057655
(43) Date de publication de la demande: 31.07.2013
(73) Titulaire: L'Air Liquide Société Anonyme pour l'Etude et l'Exploitation des Procédés Georges Claude, 75007 Paris (FR)
(72) Inventeur: DARDE, Arthur, F-75005 Paris (FR); BRIGLIA, Alain, F-49140 Corze (FR); TRAVERSAC, Xavier, F-75012 Paris (FR); SZAMLEWSKI, Christophe, F-77380 Combs La Ville (FR)
(74) Mandataire: Beroud, Amandine
(86) Numéro de dépôt international: PCT/FR2011/052075
(87) Numéro de publication internationale: WO 2012/038637

(56) Documents cités:
- EP-A1- 1 018 488
- EP-A2- 0 469 781
- FR-A1- 2 877 939
- FR-A1- 2 918 579
- GB-A- 2 147 822

## Description

La présente invention est relative à un procédé de compression d'au moins deux flux gazeux sur un compresseur unique et à son application dans un procédé de purification d'un flux gazeux ayant comme un des composants principaux du dioxyde de carbone.

L'une des voies du traitement du CO₂ implique la purification par condensation partielle d'un flux riche en CO₂ comprenant typiquement plus de 30 % mol. de CO₂. Les flux gazeux enrichis en CO₂ sont habituellement récupérés à des pressions différentes à la sortie de l'unité de purification. Aussi chacun des flux récupéré est comprimé dans un compresseur intermédiaire à la pression du flux récupéré à la plus haute pression, avant d'être mélangé avec les autres flux récupérés pour être compressé dans un compresseur final. Le compresseur final voit donc habituellement un flux constitué par le mélange de plusieurs flux sortant de compresseurs intermédiaires.

Cependant, les compresseurs intermédiaires peuvent défaillir. Il faut donc s'assurer que le manque soudain de molécules à l'aspiration du compresseur final ne le fasse pas défaillir, ce qui entraînerait la perte de toutes les molécules des différentes sources.

Notons que ce problème peut se poser dès lors que l'on a un compresseur assurant la compression de plusieurs flux gazeux. En effet, si la source d'un des flux gazeux se tarit soudainement, il faut pouvoir assurer le manque soudain de molécules à l'aspiration du compresseur.

La demande de brevet français publiée sous le n° 2 877 939 divulgue un procédé de compression d'au moins deux flux gazeux par un compresseur unique, dans lequel au moins un des flux gazeux est introduit dans une capacité tampon avant d'être introduit dans le compresseur.

La demande de brevet français publiée sous le n° 2 918 579 divulgue un procédé de purification de dioxyde de carbone dans lequel un flux liquéfié enrichi en dioxyde de carbone est vaporisé à au moins deux niveaux de pression pour produire deux flux gazeux; le flux gazeux à pression inférieure étant ensuite comprimé puis mélangé au deuxième flux puis le mélange introduit dans un compresseur final.

Notons également que l'on retrouve ce même problème dès que plusieurs flux sont introduits dans un équipement ne supportant pas une fluctuation de débit et/ou de pression supérieure à pourcentage critique.

Une solution est un procédé de compression d'au moins 2 flux gazeux par un compresseur unique ne supportant pas une fluctuation de débit et/ou de pression supérieure à un pourcentage critique, ledit procédé étant caractérisé en ce qu'au moins un des flux gazeux est introduit dans une capacité tampon avant d'être introduit dans le compresseur unique.

Lors d'une diminution du débit d'un des flux gazeux entrainant au sein du compresseur unique une fluctuation du débit et/ou de la pression supérieure au dit pourcentage critique, au moins une partie du ou des flux sortants du compresseur unique peut ainsi être réintroduite dans la capacité tampon.

La présente invention concerne un procédé de purification d'un flux gazeux comprenant un composé principal dans lequel un flux liquéfié produit, enrichi en composé principal, est vaporisé à au moins 2 niveaux de pression ; deux flux gazeux à 2 niveaux de pression sont ainsi récupérés ; le premier flux gazeux récupéré à la pression la plus basse est comprimé à l'aide d'un moyen de compression intermédiaire à la pression du deuxième flux récupéré avant d'être mélangé à celui-ci et enfin le flux mélangé enrichi en composé principal est introduit dans un équipement « final » ne supportant pas une fluctuation de débit et/ou de pression supérieure à un pourcentage critique, ledit procédé étant caractérisé en ce que le flux mélangé enrichi en composé principal est introduit dans une capacité tampon avant d'être introduit dans l'équipement final.

Par capacité tampon, on entend une capacité dont le volume dépasse significativement (au moins de 10%) le volume strictement nécessaire pour acheminer les molécules dans les tuyaux.

Le moyen de compression intermédiaire peut être un compresseur dédié à cette compression.

Par pourcentage critique, on entend le pourcentage de fluctuation du débit au-delà duquel le compresseur unique subit un dysfonctionnement.

Selon le cas, le procédé selon l'invention peut présenter une ou plusieurs des caractéristiques suivantes :
- lors d'une diminution du débit d'un des deux flux à 2 niveaux de pression au moins une partie du flux sortant de l'équipement final est réintroduit dans la capacité tampon. La réintroduction d'au moins une partie du flux sortant de l'équipement final dans la capacité tampon sera appelée dans la suite de la description « recycle/ligne anti-pompage ». En effet, on parle de pompage de l'équipement lorsqu'il manque des molécules à l'aspiration ce qui fait chuter la pression de refoulement.
- le flux liquéfié produit, enrichi en composé principal, est séparé en 3 flux pour être vaporisé à 3 niveaux de pression; trois flux gazeux à 3 niveaux de pression sont ainsi récupérés ; le premier et le deuxième flux gazeux récupérés aux pressions les plus basses sont comprimés dans deux moyens de compression intermédiaires à la pression du troisième flux gazeux récupéré avant d'être mélangés à celui-ci ;
- la pression du premier flux est comprise entre 5 et 6.5bars a (= 5.10⁵ et 6,5.10⁵ Pa) ; la pression du second flux est comprise entre 7 et 10 bars a (= 7.10⁵ et 10.10⁵ Pa) ; et la pression du troisième flux est comprise entre 8 et 15 bars a (= 8.10⁵ et 15.10⁵ Pa);
- le composé principal est du CO₂.
- le volume de ladite capacité tampon V exprimé en m³ est supérieur à Q/100, Q étant le débit du flux mélangé enrichi en composé principal exprimé en m³/h.
- l'équipement final est un compresseur final.

Le procédé de compression selon l'invention peut être mis en oeuvre dans une installation de compression comprenant :
a) au moins 2 conduites d'acheminement des au moins 2 flux gazeux ;
b) au moins une capacité tampon située sur une des conduites d'acheminement ;
c) un compresseur unique en aval des conduites d'acheminement et de la capacité tampon ; et
d) une ligne anti-pompage permettant de recycler au moins une partie du ou des flux sortant du compresseur unique dans la capacité tampon.

Notons que la ligne anti-pompage est en général connectée en aval du compresseur mais peut éventuellement être connectée en amont de la capacité tampon ou sur la capacité elle-même.

La présente invention a également pour objet une installation de purification d'un flux gazeux comprenant au moins 50% mol. de CO₂, comprenant :
i) un premier compresseur 2 pour compresser le flux gazeux ;
ii) un échangeur de chaleur 3 pour refroidir le flux gazeux comprimé ;
iii) un séparateur de phase ou une colonne à distiller 6 pour séparer le dioxyde de carbone du flux comprimé et refroidi ;
iv) un diviseur 8 pour séparer en au moins 2 flux, de préférence 3 flux le CO₂ liquide 7 issu de la colonne de distillation 6 ;
v) au moins 2 vannes de détente, de préférence 3 vannes de détente 9, 10, 11 pour détendre les 2 ou 3 flux divisés ;
vi) au moins un compresseur intermédiaire 12,13 pour comprimer au moins 1 des 2 ou 3 flux divisés et vaporisés dans l'échangeur de chaleur 3 ;
vii) un mélangeur 14 pour mélanger en aval du compresseur intermédiaire les 2 flux divisés et vaporisés ;
viii) une capacité tampon 15 pour stocker momentanément le flux mélangé ;
ix) un compresseur final 16 en aval de la capacité tampon 15 pour comprimer le flux mélangé ; et
x) une ligne d'anti-pompage 17 permettant de recycler au moins une partie du flux sortant du compresseur final dans la capacité tampon 15.

Notons que le mélangeur peut être une simple connexion de deux tuyaux à un tuyau unique.

La présente installation comprend de préférence un diviseur pour séparer en 3 flux le CO₂ liquide 7 issu de la colonne de distillation 6 ; au moins 3 vannes de détente 9, 10 et 11 pour détendre les 3 flux divisés ; au moins deux compresseurs intermédiaires 12 et 13 pour comprimer au moins 2 des 3 flux divisés et vaporisés dans l'échangeur de chaleur ; et un mélangeur 14 pour mélanger en aval des compresseurs intermédiaires les 3 flux divisés et vaporisés.

Le fait de vaporiser le produit liquide à plusieurs niveaux de pression permet de produire le froid nécessaire et d'améliorer le diagramme d'échange, ce qui se traduit par une optimisation de la consommation énergétique lors de la compression ultérieure des flux gazeux récupérés.

La ligne anti-pompage 17 permet de recycler des molécules à l'aspiration, réglant le problème de la compression d'un débit plus faible que le nominal. Il faut cependant prendre en compte le délai de réaction et d'ouverture de la vanne d'anti-pompage, le recycle pouvant mettre entre 1 et 10 secondes pour être pleinement efficace. Aussi, la solution préconisée dans la présente invention pour éviter une défaillance du compresseur final lors de cette phase transitoire est d'installer une capacité tampon, en ligne sur l'aspiration du compresseur final. Lors de l'arrêt ou d'une diminution du débit d'une des alimentations du compresseur, la pression de la capacité tampon va chuter car le compresseur continuera à prélever autant de molécules. Et dès que le recycle d'anti-pompage sera activé, la pression de la capacité tampon remontera.

Le dimensionnement de la capacité tampon dépendra de la capacité du compresseur à gérer une baisse de pression à l'aspiration et du délai d'arrivée des molécules de la ligne anti-pompage.

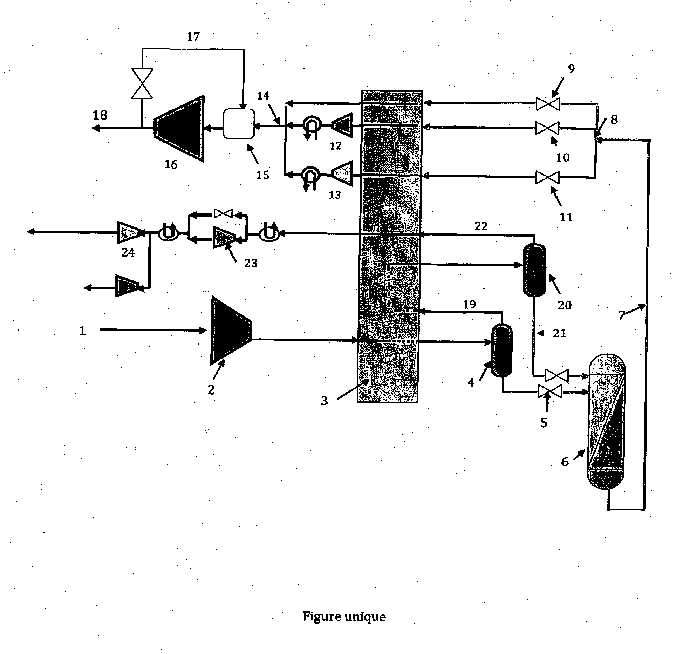

L'invention va maintenant être décrite en détail à l'aide de la figure 1.

La Figure 1 montre un appareil de séparation d'un débit ayant comme un des composants principaux du dioxyde de carbone 1, contenant au moins 50% mol., voire au moins 70% mol. de dioxyde de carbone ainsi que des impuretés légères, telles que l'azote et l'oxygène. Le débit est comprimé dans un compresseur 2 puis le débit comprimé est refroidi dans un échangeur de chaleur 3. Après séparation dans un pot séparateur 4, le liquide produit est détendu dans une vanne 5 puis envoyé en tête d'une colonne 6. Dans cette colonne 6, le liquide se sépare pour former un gaz de tête et un liquide de cuve 7 (CO2 liquide). Le liquide de cuve 7 est divisé en 3 au moyen d'un diviseur 8. Les 3 débits sont détendus dans des vannes 9, 10 et 11 à trois pressions différentes. Les 3 débits liquides se vaporisent dans l'échangeur 3. Deux des trois débits sont comprimés dans les compresseurs intermédiaires 12 et 13 et les trois débits, de nouveau à même pression, sont réunis dans un mélangeur 14. Le débit mélangé est introduit dans une capacité tampon puis comprimé dans un compresseur 16. Et on récupère un flux 18 enrichi en CO2.

Lors d'une diminution (arrêt) du débit d'un des 3 flux à 3 niveaux de pression au moins une partie du flux 18 sortant du compresseur final est réintroduit dans la capacité tampon 15 via la ligne anti-pompage 17.

De façon préférentielle, le gaz 19 du pot séparateur 4 se réchauffe dans l'échangeur 7 avant d'être à nouveau séparé dans un pot séparateur 20. Le liquide 21 produit est alors envoyé après détente en tête de la colonne 6. Le gaz 22 du pot séparateur 20 se réchauffe dans l'échangeur 7 puis est détendus dans les turbines 23 et 24. Et on récupère en sortie des incondensables.

L'installation comprend de préférence un système de détection du débit en amont du compresseur final. Lorsque ce système détecte une baisse du débit, un signal est envoyé vers la ligne anti-pompage qui s'ouvre pour permettre le recyclage d'au moins une partie du flux sortant dans la capacité tampon.

### Exemple :

Un procédé a été choisi dans lequel le CO₂ liquide a été divisé en 2 flux. Chacun des flux présente un débit de 10 000 m³/h.

Un des 2 débits est arrêté. La mise en route de la ligne anti-pompage prend typiquement 3 secondes : 1 seconde pour la détection du problème et l'envoi du signal à la ligne d'anti-pompage + 2 secondes pour l'ouverture de la vanne d'entrée de la ligne d'anti-pompage et la circulation des molécules jusqu'à la capacité tampon.

Ces 3 secondes représentent en terme de débit: (10 000 x 3) / 3600 = 8.33 m³. Autrement dit, sans la capacité tampon, le compresseur final subirait en 3 secondes une perte de 8.33 m³ correspondant à une chute de pression de 50%. Avec une capacité tampon de l'ordre de 50 m³, la chute de pression est inférieure à 17% ; avec une capacité tampon de l'ordre de 70 m³, la chute de pression est inférieure à 12%...

Le compresseur final gérant mieux une chute de pression inférieure à 17% ou 12 % qu'une chute de pression de 50%, on comprend aisément l'intérêt de la capacité tampon.

## Revendications

1. Procédé de purification d'un flux gazeux comprenant un composé principal dans lequel un flux liquéfié produit, enrichi en composé principal, est vaporisé à au moins 2 niveaux de pression ; deux flux gazeux à 2 niveaux de pression sont ainsi récupérés ; le premier flux gazeux récupéré à la pression la plus basse est comprimé à l'aide d'un moyen de compression intermédiaire à la pression du deuxième flux récupéré avant d'être mélangé à celui-ci et enfin le flux mélangé enrichi en composé principal est introduit dans un équipement « final » ne supportant pas une fluctuation de débit et/ou de pression supérieure à un pourcentage critique, ledit procédé étant **caractérisé en ce que** le flux mélangé enrichi en composé principal est introduit dans une capacité tampon avant d'être introduit dans l'équipement final.

2. Procédé selon la revendication 1, **caractérisé en ce que** lors d'une diminution du débit d'un des deux flux à 2 niveaux de pression au moins une partie du flux sortant de l'équipement final est réintroduit dans la capacité tampon.

3. Procédé selon l'une des revendications 1 ou 2, **caractérisé en ce que** le flux liquéfié produit enrichi en composé principal est séparé en 3 flux pour être vaporisé à 3 niveaux de pression ; trois flux gazeux à 3 niveaux de pression sont ainsi récupérés ; le premier et le deuxième flux gazeux récupérés aux pressions les plus basses sont comprimés dans deux moyens de compression intermédiaires à la pression du troisième flux gazeux récupéré avant d'être mélangés à celui-ci.

4. Procédé selon la revendication 3, **caractérisé en ce que** :
- la pression du premier flux est comprise entre 5 et 6.5 bars a ;
- la pression du second flux est comprise entre 7 et 10 bars a ; et
- la pression du troisième flux est comprise entre 8 et 25 bars a.

5. Procédé selon l'une des revendications 1 à 4, **caractérisé en ce que** le composé principal est du CO₂.

6. Procédé selon l'une des revendications 1 à 5, **caractérisé en ce que** l'équipement final est un compresseur.

7. Installation de purification d'un flux gazeux comprenant au moins 50% mol. de CO₂, comprenant :
i) un premier compresseur (2) pour compresser le flux gazeux ;
ii) un échangeur de chaleur (3) pour refroidir le flux gazeux comprimé ;
iii) un séparateur de phase ou une colonne à distiller (6) pour séparer le dioxyde de carbone du flux comprimé et refroidi ;
iv) un diviseur (8) pour séparer au moins en 2 flux le CO2 liquide (7) issu de la colonne de distillation (6) ;
v) au moins 2 vannes de détente (9 et/ou 10 et/ou11) pour détendre les 2 flux divisés ;
vi) au moins un compresseur intermédiaire (12 et/ou 13) pour comprimer au moins 1 des 2 flux divisés et vaporisés dans l'échangeur de chaleur 3 ;
vii) un mélangeur (14) pour mélanger en aval du compresseur intermédiaire les 2 flux divisés et vaporisés ;
viii) une capacité tampon (15) pour stocker momentanément le flux mélangé ;
ix) un compresseur final (16) en aval de la capacité tampon (15) pour comprimer le flux mélangé ; et
x) une ligne d'anti-pompage (17) permettant de recycler au moins une partie du flux sortant du compresseur final dans la capacité tampon (15).

8. Installation selon la revendication 7, **caractérisé en ce que** la dite installation comprend :
iv) un diviseur (8) pour séparer en 3 flux le CO₂ liquide issu de la colonne de distillation ;
v) au moins 3 vannes de détente (9, 10 et 11) pour détendre les 3 flux divisés ;
vi) au moins deux compresseurs intermédiaires (12 et 13) pour comprimer au moins 2 des 3 flux divisés et vaporisés dans l'échangeur de chaleur (3) ;
vii) un mélangeur (14) pour mélanger en aval des compresseurs intermédiaires les 3 flux divisés et vaporisés.

9. Installation selon l'une des revendications 7 ou 8, **caractérisé en ce que** ladite installation comprend au moins un système de détection situé en amont du compresseur final (16) et permettant de détecter une baisse du débit ou de pression et d'envoyer un signal à la vanne d'ouverture de la ligne anti-pompage (17).

## Patentansprüche

1. Verfahren zum Reinigen eines Gasstroms, der eine Hauptkomponente enthält, bei dem ein mit der Hauptkomponente angereicherter, erzeugter verflüssigter Strom mit mindestens 2 Druckstufen verdampft wird; dadurch zwei Gasströme mit 2 Druckstufen rückgewonnen werden; der erste rückgewonnene Gasstrom mit dem niedrigsten Druck mit Hilfe eines Zwischenverdichtungsmittels auf den Druck des zweiten rückgewonnenen Stroms verdichtet wird, bevor er mit diesem gemischt wird, und schließlich der mit der Hauptkomponente angereicherte Strom in ein "End"-Gerät eingeleitet wird, das keiner Durchflussschwankung und/oder Druckschwankung standhält, die größer als ein kritischer Prozentsatz ist, wobei das Verfahren **dadurch gekennzeichnet ist, dass** der mit der Hauptkomponente angereicherte gemischte Strom in eine Pufferkapazität eingeleitet wird, bevor er in das Endgerät eingeleitet wird.

2. Verfahren nach Anspruch 1, **dadurch gekennzeichnet, dass** bei einer Verringerung des Durchflusses eines der zwei Ströme mit 2 Druckstufen mindestens ein Teil des Stroms, der aus dem Endgerät austritt, in die Pufferkapazität zurückgeleitet wird.

3. Verfahren nach einem der Ansprüche 1 oder 2, **dadurch gekennzeichnet, dass** der mit der Hauptkomponente angereicherte, erzeugte verflüssigte Strom in 3 Ströme geteilt wird, um mit drei Druckstufen verdampft zu werden; dadurch drei Gasströme mit 3 Druckstufen rückgewonnen werden; der erste und der zweite rückgewonnene Gasstrom mit den niedrigsten Drücken in zwei Zwischenverdichtungsmitteln auf den Druck des dritten rückgewonnenen Gasstroms verdichtet werden, bevor sie mit diesem gemischt werden.

4. Verfahren nach Anspruch 3, **dadurch gekennzeichnet, dass**,
- der Druck des ersten Stroms zwischen 5 und 6,5 bar a beträgt;
- der Druck des zweiten Stroms zwischen 7 und 10 bar a beträgt; und
- der Druck des dritten Stroms zwischen 8 und 25 bar a beträgt.

5. Verfahren nach einem der Ansprüche 1 bis 4, **dadurch gekennzeichnet, dass** die Hauptkomponente CO₂ ist.

6. Verfahren nach einem der Ansprüche 1 bis 5, **dadurch gekennzeichnet, dass** das Endgerät ein Verdichter ist.

7. Anlage zum Reinigen eines Gasstroms, der mindestens 50 Mol-% CO₂ enthält, Folgendes umfassend:
i) einen ersten Verdichter (2), um den Gasstrom zu verdichten;
ii) einen Wärmetauscher (3), um den verdichteten Gasstrom abzukühlen;
iii) einen Phasenabscheider oder eine Destillationskolonne (6), um Kohlendioxid aus dem verdichteten und abgekühlten Strom abzuscheiden;
iv) einen Teiler (8), um das flüssige CO₂ (7), das aus der Destillationskolonne (6) hervorgegangen ist, in mindestens 2 Ströme zu teilen;
v) mindestens 2 Druckminderventile (9 und/oder 10 und/oder 11), um die 2 geteilten Ströme zu entspannen;
vi) mindestens einen Zwischenverdichter (12 und/oder 13), um mindestens 1 der 2 geteilten und in dem Wärmetauscher 3 verdampften Ströme zu verdichten;
vii) einen Mischer (14), um stromabwärts des Zwischenverdichters die 2 geteilten und verdampften Ströme zu mischen;
viii) eine Pufferkapazität (15), um den gemischten Strom vorübergehend zu speichern;
ix) einen Endverdichter (16) stromabwärts der Pufferkapazität (15), um den gemischten Strom zu verdichten; und
x) eine Pumpschutzleitung (17), die es ermöglicht, mindestens einen Teil des aus dem Endverdichter austretenden Stroms in die Pufferkapazität (15) zurückzuführen.

8. Anlage nach Anspruch 7, **dadurch gekennzeichnet, dass** die Anlage Folgendes umfasst:
iv) einen Teiler (8), um das flüssige CO₂, das aus der Destillationskolonne hervorgegangen ist, in 3 Ströme zu teilen;
v) mindestens 3 Druckminderventile (9, 10 und 11), um die 3 geteilten Ströme zu entspannen;
vi) mindestens zwei Zwischenverdichter (12 und 13), um mindestens 2 der 3 geteilten und in dem Wärmetauscher (3) verdampften Ströme zu verdichten;
vii) einen Mischer (14), um stromabwärts der Zwischenverdichter die 3 geteilten und verdampften Ströme zu mischen.

9. Anlage nach einem der Ansprüche 7 oder 8, **dadurch gekennzeichnet, dass** die Anlage mindestens ein Detektionssystem umfasst, das stromaufwärts des Endverdichters (16) angeordnet ist und das Detektieren einer Abnahme des Durchflusses oder des Drucks und das Versenden eines Signals an das Ventil zum Öffnen der Pumpschutzleitung (17) ermöglicht.

## Claims

1. Method for purifying a gas stream comprising a main compound, in which a liquefied product stream, enriched with main compound, is vaporised at at least two pressure levels, two gas streams at two pressure levels are thus recovered, the first gas stream recovered at the lower pressure is compressed using an intermediate compression means to the pressure of the second recovered stream before being mixed therewith, and finally the mixed stream enriched with main compound is introduced into a "final" piece of equipment that does not tolerate a fluctuation of flow rate and/or of pressure above a critical percentage, said method being **characterised in that** the enriched mixed stream of main compound is introduced into a buffer tank before being introduced into the final piece of equipment.

2. Method according to claim 1, **characterised in that** during a reduction of the flow rate of one of the two streams at two pressure levels, at least one portion of the stream leaving the final piece of equipment is reintroduced into the buffer tank.

3. Method according to either claim 1 or claim 2, **characterised in that** the liquefied product stream enriched with main compound is separated into three streams to be vaporised at three pressure levels, three gas streams at three pressure levels are thus recovered, and the first and the second gas streams recovered at the lowest pressures are compressed in two intermediate compression means to the pressure of the third recovered gas stream before being mixed therewith.

4. Method according to claim 3, **characterised in that**
- the pressure of the first stream is between 5 and 6.5 bar a,
- the pressure of the second stream is between 7 and 10 bar a, and
- the pressure of the third stream is between 8 and 25 bar a.

5. Method according to any of claims 1 to 4, **characterised in that** the main compound is CO₂.

6. Method according to any of claims 1 to 5, **characterised in that** the final piece of equipment is a compressor.

7. Apparatus for purifying a gas stream comprising at least 50 mol % of CO₂, comprising:
i) a first compressor (2) for compressing the gas stream;
ii) a heat exchanger (3) for cooling the compressed gas stream;
iii) a phase separator or a distillation column (6) for separating the carbon dioxide from the compressed and cooled stream;
iv) a divider (8) for separating, at least into two streams, the liquid CO₂ (7) coming from the distillation column (6);
v) at least 2 expansion valves (9 and/or 10 and/or 11) for expanding the two divided streams;
vi) at least one intermediate compressor (12 and/or 13) for compressing at least one of the two divided streams vaporised in the heat exchanger 3;
vii) a mixer (14) for mixing, downstream of the intermediate compressor, the two divided and vaporised streams;
viii) a buffer tank (15) for momentarily storing the mixed stream;
ix) a final compressor (16) downstream of the buffer tank (15) for compressing the mixed stream; and
x) an anti-pumping line (17) that makes it possible to recycle at least part of the stream leaving the final compressor to the buffer tank (15).

8. Apparatus according to claim 7, **characterised in that** said apparatus comprises:
iv) a divider (8) for separating, into three streams, the liquid CO₂ coming from the distillation column;
v) at least three expansion valves (9, 10 and 11) for expanding the three divided streams;
vi) at least two intermediate compressors (12 and 13) for compressing at least two of the three divided streams vaporised in the heat exchanger (3);
vii) a mixer (14) for mixing, downstream of the intermediate compressors, the three divided and vaporised streams.

9. Apparatus according to either claim 7 or claim 8, **characterised in that** said apparatus comprises at least one detection system located upstream of the final compressor (16) that makes it possible to detect a drop in the flow rate or pressure and to send a signal to the opening valve of the anti-pumping line (17).
